# EUROPÄISCHE PATENTSCHRIFT

(11) **EP 3 512 763 B1**
(45) Veröffentlichungstag und Bekanntmachung des Hinweises auf die Patenterteilung: **01.04.2020**
(21) Anmeldenummer: 17765377.1
(22) Anmeldetag: 01.09.2017
(51) Int. Cl.: B62D 59/04

(54) **GESPANN UND VERFAHREN ZUR STEUERUNG EINES ANTRIEBES**
COMBINATION AND METHOD FOR CONTROLLING A DRIVE
ATTELAGE ET PROCÉDÉ DE COMMANDE D'UN ORGANE D'ENTRAÎNEMENT

(30) Priorität: 13.09.2016 DE 102016117165
(43) Veröffentlichungstag der Anmeldung: 24.07.2019
(73) Patentinhaber: SAF-HOLLAND GmbH, 63856 Bessenbach (DE)
(72) Erfinder: HÖSSLE, Florian, 5020 Salzburg (AT); WALLMEIER, Stefan, 63773 Goldbach (DE); STEGMANN, Rainer, 63768 Hösbach (DE)
(74) Vertreter: Müller Schupfner & Partner Patent- und Rechtsanwaltspartnerschaft mbB
(86) Internationale Anmeldenummer: PCT/EP2017/071993
(87) Internationale Veröffentlichungsnummer: WO 2018/050460

(56) Entgegenhaltungen:
- WO-A1-2011/108948
- DE-A1- 10 244 298
- GB-A- 2 486 474
- US-A1- 2007 194 557
- US-A1- 2013 076 497

## Beschreibung

Die vorliegende Erfindung betrifft ein Gespann sowie ein Verfahren zur Steuerung eines Antriebs.

Es ist aus dem Stand der Technik bereits bekannt, an einem Anhänger, welcher an ein Zugfahrzeug angehängt ist, einen Antrieb, insbesondere einen Zusatzantrieb, zu koppeln, welcher im Bedarfsfall eine höhere Antriebskraft auf den Anhänger übertragen kann und somit beispielsweise in schwierigem Gelände ein Vorankommen des Gespanns aus Zugfahrzeug und Anhänger ermöglicht. Insbesondere sind in diesem Zusammenhang hydraulisch betriebene Antriebe bereits als Stand der Technik bekannt, wobei auch mit einzelnen Rädern gekoppelte Elektromotoren eingesetzt werden. Die bis dato bekannten Steuerungen oder Regeleinrichtungen zur Ansteuerung und zum Betrieb derartiger Antriebe sind jedoch bislang sehr einfach ausgeführt und es ist stets vom Anwender bzw. vom Fahrzeugführer eines Gespanns mit einem derartigen Antrieb ein hoher Steuerungsaufwand gefordert, um in verschiedenen Betriebszuständen des Gespanns die richtige Einstellung und den angemessenen Betriebsmodus am Antrieb vorzunehmen.

Die GB 2 486 474 A zeigt eine Kombination einer Traktoreinheit und einer Anhängereinheit, wobei die Traktoreinheit und die Anhängereinheit durch eine Verbindungsvorrichtung verbunden sind, wobei die Kombination eine Sensorvorrichtung zum Messen von auftretenden Verbindungslasten beinhaltet.

Die WO 2011/108948 A1 befasst sich mit einer Antriebsvorrichtung für ein gezogenes Fahrzeug.

Die US 2013/0076497 A1 offenbart eine Fahrzeuganordnung umfassend ein Zugfahrzeug und ein gezogenes Fahrzeug, wobei eine Anzeigevorrichtung anzeigt, wie viel Material geladen ist.

Die US 2007/0194557 A1 zeigt eine Zugdeichsel, welche zwei autonome Fahrzeuge verbindet und steuert.

Die DE 102 44 298 A1 befasst sich mit einem Lastzug umfassend eine Zugmaschine und einen Anhänger, wobei die Zugmaschine mit dem Anhänger über eine Schleppkupplung verbunden ist und wobei der Anhänger eine selbstständig arbeitende Energieerzeugungsvorrichtung aufweist.

Aufgabe der vorliegenden Erfindung ist es daher, ein verbessertes Gespann mit einem Antrieb am Anhänger sowie ein verbessertes Verfahren zur Steuerung eines Antriebs bereitzustellen.

Diese Aufgaben werden gelöst mit einem Gespann gemäß Anspruch 1 sowie einem Verfahren gemäß Anspruch 14.

Erfindungsgemäß weist das Gespann ein Zugfahrzeug und einen Anhänger auf, wobei der Anhänger einen Antrieb aufweist, welcher mit einem Rad des Anhängers gekoppelt ist bzw. in Wirkverbindung steht, wobei eine Regeleinheit vorgesehen und ausgelegt ist, ein Signal eines Sensors zu empfangen, wobei die Regeleinheit den Betrieb des Antriebs abhängig von dem Signal steuert. Das Gespann ist vorzugsweise ein Nutzfahrzeug bestehend aus einem Zugfahrzeug und einem Anhänger, wie beispielsweise einem Sattelauflieger. Denkbar ist auch ein zweiachsiger Kipper, an welchem ein ebenfalls zweiachsiger Anhänger mit gelenkter Deichsel angehängt ist. Die Regeleinheit ist dabei vorzugsweise ein Mikrocontroller-Schaltkreis, welcher mit Signaleingängen und entsprechenden Signalausgängen ausgestattet ist. Vorzugsweise weist die Regeleinheit einen internen Speicher auf, in welchem Wertetabellen gespeichert werden können, um aus eingehenden Signalen eine entsprechende Schaltlogik zu errechnen und entsprechend ausgehende Signale zur Ansteuerung des Antriebs oder eine Vielzahl von Antrieben abgeben zu können. Mit Vorteil steuert die Regeleinheit eine Ventilanordnung, welche wiederum den Zufluss von Hydraulikfluid an einen als hydrostatischen Zusatzmotor ausgebildeten Antrieb steuert. Neben dem Signal, welches von einem Sensor an die Regeleinheit gesendet wird, empfängt die Regeleinheit auch das Steuersignal von einem Anwender, insbesondere vom Führer des Gespanns. Das vom Anwender gesendete Signal ist dabei vorzugsweise ein An- oder Aus-Signal oder ein Signal welches einen bestimmten Betriebszustand, wie insbesondere ein bestimmtes Drehmoment, vom Zusatzantrieb fordert und entsprechend durch die Regeleinheit interpretiert und in ein Steuersignal an den Zusatzantrieb umgesetzt wird. Neben dem Signal, welches vom Anwender an die Regeleinheit gesendet wird, empfängt die Regeleinheit auch das Signal von zumindest einem Sensor, welcher am Zugfahrzeug oder am Anhänger vorgesehen ist und den Bewegungszustand oder den Betriebszustand einer bestimmten Kenngröße des Gespanns überwacht. Dabei überlagert die Regeleinheit mit Vorteil das vom Anwender an die Regeleinheit gesandte Signal durch eine durch das vom Sensor empfangene Signal ausgelöste Schaltlogik. Mit anderen Worten wird beispielsweise, auch wenn der Anwender ein Inbetriebnehmen des Antriebs fordert, die Geschwindigkeit des Gespanns aber zu hoch für den Einsatz des Antriebs ist, die Regeleinheit den Antrieb nicht in Betrieb nehmen, wobei insbesondere die Sicherheit verbessert und die Lebensdauer des Antriebs dadurch verlängert werden kann.

Erfindungsgemäß ist ein erster Sensor vorgesehen, welcher die Winkelausrichtung zwischen dem Zugfahrzeug und dem Anhänger misst bzw. erfasst und als erstes Signal an die Regeleinheit übermittelt, wobei die Regeleinheit aus dem ersten Signal einen Ist-Winkel bestimmt und diesen mit einem Grenzwinkel vergleicht, wobei die Regeleinheit den Antrieb nur in Betrieb nimmt, wenn der Ist-Winkel kleiner als der Grenzwinkel ist. Insbesondere um zu vermeiden, dass bei einer stark eingelenkten Stellung zwischen dem Zugfahrzeug und dem Anhänger der Zusatzantrieb ein Drehmoment auf das Rad des Anhängers überträgt, welches dazu führen würde, dass eine quer zur Längsrichtung des Zugfahrzeugs wirkende Kraftkomponente auf das Zugfahrzeug wirkt und dabei zum einen ein Umkippen des Zugfahrzeugs und zu einem erhöhten Reifenverschleiß am Zugfahrzeug führen könnte, überwacht ein erster Sensor die Winkelausrichtung zwischen dem Zugfahrzeug und dem Anhänger und übermittelt ein entsprechendes erstes Signal an die Regeleinheit.

Der von der Regeleinheit aus dem Signal errechnete Ist-Winkel ist dabei vorzugsweise ein Winkel, welcher die Abweichung der Ausrichtung der beiden Längsachsen von Nutzfahrzeug und Zugfahrzeug von einem Winkel von 180° ausdrückt. Mit anderen Worten ist, wenn die Längsachsen des Zugfahrzeugs und des Anhängers kollinear oder parallel zueinander sind, der Ist-Winkel 0°. Der Ist-Winkel ist somit definiert als die Winkelabweichung der Längsachsen des Zugfahrzeuges und des Anhängers von einer parallelen Ausrichtung zueinander. Darüber hinaus wird der Ist-Winkel vorzugsweise nur in der horizontalen Ebene gemessen. Mit anderen Worten ist der Ist-Winkel also der Winkel zwischen den Längsachsen des Zugfahrzeugs und des Anhängers in einer Draufsicht auf das Gespann, wobei als Ist-Winkel der jeweils kleinste zwischen den beiden Längsachsen messbare Winkel definiert ist. Als Grenzwinkel wird vorzugsweise ein Grenzwert bezeichnet, welcher von der Regeleinheit aus anderen Zustandswerten, welche am Gespann gemessen werden, errechnet wird oder welcher in einem Speicher der Regeleinheit hinterlegt ist. Mit Vorteil kann auf diese Weise die Sicherheit beim Betrieb eines Gespanns mit einem Antrieb bzw. einem Zusatzmotor am Anhänger deutlich erhöht werden.

Erfindungsgemäß liegt der Grenzwinkel Werte zwischen 10° und 45° und vorzugsweise zwischen 15° und 35°. Entscheidend für die Auswahl des richtigen Grenzwinkels sind dabei physikalische Faktoren sowohl des Aufbaus des Nutzfahrzeugs, der Beladung und der aktuellen Bewegungsgeschwindigkeit des Nutzfahrzeugs. Es hat sich gezeigt, dass ein Winkelbereich zwischen 10° und 45° sowohl im Stand als auch bei einem bewegten Gespann für den überwiegenden Teil der derzeit bekannten Nutzfahrzeugsysteme einen guten Kompromiss bereitstellt aus der einerseits vielseitigen Einsetzbarkeit eines zusätzlichen Antriebs am Anhänger als auch einer ausreichend hohen Sicherheit gegen zu große Querkomponenten, welche auf das Zugfahrzeug durch den Antrieb übertragen werden könnten. Der engere Bereich von 15° bis 35° und besonders bevorzug von ca. 25° hat sich dabei für Anhänger von 40-Tonner-Nutzfahrzeug-Gespannen als besonders sicher und zuverlässig erwiesen

Mit Vorteil misst ein zweiter Sensor die Drehgeschwindigkeit eines Rades des Zugfahrzeugs und übermittelt diese als zweites Signal an die Regeleinheit, wobei die Regeleinheit aus dem zweiten Signal eine Ist-Geschwindigkeit bestimmt und diese mit einer Grenzgeschwindigkeit vergleicht, wobei die Regeleinheit den Antrieb nur in Betrieb nimmt, wenn die Ist-Geschwindigkeit kleiner als die Grenzgeschwindigkeit ist. Ähnlich zum Vorgehen der Regeleinheit beim Vergleich eines Ist-Winkels mit einem Grenzwinkel ist die Regeleinheit vorzugsweise auch dafür ausgelegt, ein zweites Signal eines zweiten Sensors zu empfangen, welcher die Drehgeschwindigkeit bzw. die Umdrehungszahl pro Minuten an einem Rad des Zugfahrzeugs misst. Aus diesem vorzugsweise digitalen Signal errechnet die Regeleinheit anhand von gespeicherten Daten zur Geometrie der Fahrzeugräder des Gespanns eine Ist-Geschwindigkeit. Diese Ist-Geschwindigkeit wird mit einer im Speicher der Regeleinheit gespeicherten Grenzgeschwindigkeit verglichen, wobei eine Schaltlogik der Regeleinheit den Antrieb nur dann in Betrieb nimmt, wenn die Ist-Geschwindigkeit kleiner als die vorgegebene Grenzgeschwindigkeit ist. Auf diese Weise kann verhindert werden, dass der Antrieb in Betrieb genommen wird, wenn die Geschwindigkeit des Gespanns für dessen Betrieb zu hoch ist und eine Beschädigung des Antriebs drohen könnte.

Mit Vorteil ist alternativ oder zusätzlich ein dritter Sensor vorgesehen, welcher die Drehgeschwindigkeit des Rads des Anhängers, an welches der Antrieb gekoppelt ist, misst und als drittes Signal an die Regeleinheit übermittelt, wobei die Regeleinheit aus dem dritten Signal eine Ist-Geschwindigkeit bestimmt und diese mit einer Grenzgeschwindigkeit vergleicht, wobei die Regeleinheit den Antrieb nur in Betrieb nimmt, wenn die Ist-Geschwindigkeit kleiner ist als die Grenzgeschwindigkeit. Analog zur zuvor beschriebenen Messung der Geschwindigkeit eines Rads am Zugfahrzeug kann auch am Rad des Anhängers dessen Drehgeschwindigkeit gemessen und hieraus von der Regeleinheit eine Ist-Geschwindigkeit des Anhängers berechnet werden. Die weitere Regelungsfolge ist dabei gleich der zuvor beschriebenen Regelungsfolge bei Messung der Drehgeschwindigkeit des Rades am Zugfahrzeug.

Mit Vorteil liegt die Grenzgeschwindigkeit zwischen 5 km/h und 40 km/h und vorzugsweise zwischen 8 km/h und 15 km/h an. Es hat sich gezeigt, dass die derzeit auf dem Markt verwendbaren Zusatzmotoren Maximalgeschwindigkeiten von 40 km/h erlauben bzw. bei größeren Geschwindigkeiten nicht mehr dieselbe Effizienz aufweisen wie der Hauptantrieb des Nutzfahrzeugs. Zudem ist zu erwarten, dass zumindest bis zu einer Geschwindigkeit von 5 km/h ein Eingriff des Antriebs zur Unterstützung der Vorwärtsfahrt oder Rückwärtsfahrt des Gespanns, insbesondere im schwierigen Gelände, sinnvoll ist. So hat sich gezeigt, dass bei Fahrzeugen, die in besonders schwerem Gelände unterwegs sind, teilweise Geschwindigkeiten über 5 km/h ein Sicherheitsrisiko darstellen, so dass eine Grenzgeschwindigkeit von 5 km/h für derartige Gebiete vorgesehen sein kann. Eine Grenzgeschwindigkeit, die zwischen 8 und 15 km/h liegt, hat sich dabei insbesondere für den Einsatz von hydrostatischen Zusatzantrieben bewährt, da diese in diesem Bereich die größte Effizienz und Lebensdauer erreichen.

Mit Vorteil ermittelt die Regeleinheit aus dem zweiten Signal und dem dritten Signal eine Geschwindigkeitsdifferenz zwischen dem Rad des Zugfahrzeugs und dem Rad des Anhängers und vergleicht diese mit einer Grenzdifferenz, wobei die Regeleinheit den Antrieb automatisch in Betrieb nimmt, wenn die Geschwindigkeitsdifferenz größer als die Grenzdifferenz ist. Das hier beschriebene Vorgehen der Regeleinheit entspricht einer Anti-Schlupfregelung. Dieses Prinzip soll hierbei auf das Zusammenspiel eines Zugfahrzeugs und des Anhängers, welcher am Zugfahrzeug angehängt ist, übertragen werden. Wenn eine Geschwindigkeitsdifferenz zwischen dem angetriebenen Rad des Zugfahrzeugs und dem angetriebenen Rad des Anhängers besteht, ist dies ein Hinweis darauf, dass entweder das Rad des Zugfahrzeugs oder das Rad des Anhängers keine Traktion mit dem entsprechenden Untergrund hat. Für diesen Fall ist es bevorzugt, dass die Regeleinheit automatisch und ohne dass der Anwender ein entsprechendes Signal an die Regeleinheit senden muss, den Antrieb am Anhänger entsprechend zugeschaltet. Dabei ist es bevorzugt, dass stets nur eine Differenz, bei welcher die Drehgeschwindigkeit des Rads des Zugfahrzeugs höher ist als die Drehgeschwindigkeit des Rads des Anhängers, eine entsprechende Schaltung der Regeleinheit verursacht. Sollte das angetriebene Rad des Anhängers schneller drehen als das angetriebene Rad des Nutzfahrzeugs, so ist es bevorzugt, dass die Regeleinheit den Antrieb am Anhänger ausschaltet.

Vorzugsweise liegt die Grenzdifferenz zwischen 3 Umdrehungen pro Minute und 45 Umdrehungen pro Minute. In diesem Differenzbereich kann ein Durchdrehen der Räder am Zugfahrzeug effektiv verhindert werden, und damit sowohl der Vortrieb des Gespanns verbessert werden, als auch ein zusätzlicher Reifenverschleiß am Zugfahrzeug verhindert werden.

Weiterhin bevorzugt bestimmt die Regeleinheit den Grenzwinkel in Abhängigkeit von der Ist-Geschwindigkeit, wobei der Grenzwinkel mit steigender Ist-Geschwindigkeit abnimmt. Für den bevorzugten Fall, dass sowohl der Ist-Winkel als auch eine Ist-Geschwindigkeit am Gespann gemessen und durch die Regeleinheit verarbeitet werden, ist es bevorzugt, dass der Grenzwinkel kein statisch oder fest in der Regeleinheit gespeicherter Wert ist, sondern in Abhängigkeit von der errechneten Ist-Geschwindigkeit des Gespanns von der Regeleinheit errechnet wird. So ist es insbesondere bei höheren Geschwindigkeiten des Gespanns erforderlich, den Grenzwinkel abzusenken, da ansonsten gefährliche Querkraftkomponenten durch den zu starken Einsatz des Antriebs am Anhänger erzeugt werden können, welche das Gespann zum Umkippen bringen könnten. Es kann auf diese Weise die Sicherheit beim Betrieb eines Gespanns mit Zusatzantrieb am Anhänger erhöht werden.

Bevorzugt ist der zweite Sensor und/oder der, sofern vorhanden, dritte Sensor als induktiver Sensor ausgebildet. Induktive Sensoren sind insbesondere zum Einsatz mit einem Polrad geeignet, wobei entsprechend bereits an Nutzfahrzeugen vorhandene Polräder verwendet werden können, um einen zweiten und/oder einen dritten Sensor einsetzen zu können. Es können auf diese Weise Kosten gesenkt werden, da bereits an Nutzfahrzeugen vorgesehene Geschwindigkeitssensierungen Anwendungen finden können.

Besonders bevorzugt erzeugen der zweite Sensor und/oder der dritte Sensor dabei ein digitales Rechtecksignal. Hierfür ist der als induktiver Sensor ausgebildete Sensor vorzugsweise mit einer integrierten Signalfilterung und einem Schmitt-Trigger, also einer Analog-Digital-Wandlung ausgestattet. Ein digitales oder binäres Signal hat den Vorteil, dass es von einer größeren Anzahl von Regeleinheiten ohne weiteres interpretiert werden kann. Darüber hinaus ist ein solches vom Sensor erzeugtes Signal bei sehr geringen Geschwindigkeiten bzw. Drehgeschwindigkeiten des jeweiligen Rads mit einer ausreichenden Signalstärke vorhanden, so dass auch bei geringen Geschwindigkeiten des Nutzfahrzeugs ein entsprechendes Signal von der Regeleinheit verwendet und ausgewertet werden kann.

Bevorzugt kann der zweite Sensor und/oder der dritte Sensor bei Drehgeschwindigkeiten des Rads, welche kleiner als 10 Umdrehungen pro Minute, vorzugsweise kleiner als 1 Umdrehung pro Minute und besonders bevorzugt kleiner als 0,5 Umdrehungen pro Minute sind, ein Signal ausgeben, welches für die Regeleinheit interpretierbar ist. Dieses Signal ist vorzugsweise ein digitales Signal, welches somit je nach Einstellung des Schmitt-Triggers, der wiederum ein analoges Signal in ein digitales Signal wandelt, stets eine entsprechende Amplitude aufweist und somit von der Regeleinheit auch bei geringen Geschwindigkeiten des Rads interpretiert werden kann. Mit Vorteil eignet sich der Sensor somit für Gespanne mit Zusatzantrieb, bei denen die zu regelnden Geschwindigkeiten oft kleiner als 5 km/h sind.

Besonders bevorzugt sind am Anhänger zwei Antriebe vorgesehen und mit jeweils einem Rad des Anhängers gekoppelt, wobei die Regeleinheit abhängig von den über Sensoren übermittelten Signalen die Antriebe gleich oder unterschiedlich ansteuert. In einer ersten bevorzugten Ausführungsform ist dabei jeweils ein Rad auf der rechten Seite des Anhängers und ein Rad auf der linken Seite des Anhängers durch je einen Antrieb angetrieben. Für diesen Fall ist die Regeleinheit ausgelegt, beispielsweise bei Kurvenfahrt des Gespanns, welche durch einen ersten Sensor und die entsprechende Winkelabweichung zwischen Zugfahrzeug und Anhänger ermittelt und an die Regeleinheit übermittelt wird, an dem jeweils kurvenäußeren Rad eine größere Antriebsgeschwindigkeit einzustellen als an dem kurveninneren Rad. Mit anderen Worten kann die Regeleinheit somit die Funktionsweise eines Differentials nachbilden. Alternativ oder zusätzlich bevorzugt sind die beiden angetriebenen Räder des Anhängers in Fahrtrichtung hintereinander angeordnet, wobei je nach Drehmomentbedarf am Anhänger nur einer oder beide Antriebe von der Regeleinheit angesteuert werden. Insbesondere bevorzugt sind dabei insgesamt vier Räder des Anhängers durch Antriebe angetrieben, wobei jeweils zwei Antriebe hintereinander auf der fahrzeugrechten und zwei Antriebe hintereinander auf der fahrzeuglinken Seite angeordnet sind.

Erfindungsgemäß ist ein Verfahren zur Steuerung eines Antriebs vorgesehen, wobei der Antrieb an einem Anhänger angeordnet und mit einem Rad des Anhängers gekoppelt ist, welches die Schritte aufweist:
a) Bereitstellung einer Regeleinheit und eines Sensors, wobei die Regeleinheit mit dem Sensor und dem Antrieb über Signalleitungen und/oder mechanisch verbunden ist,
b) Messen eines Winkels zwischen einem Zugfahrzeug und dem Anhänger und/oder eine Drehgeschwindigkeit eines Rads am Zugfahrzeug und/oder am Anhänger,
c) Übermitteln des oder der gemessenen Werte in Form eines Signals an die Regeleinheit,
d) Bestimmen von Ist-Werten für Winkel oder Geschwindigkeit oder Geschwindigkeitsdifferenz durch die Regeleinheit und Vergleichen der Ist-Werte mit Grenzwerten, wobei die Grenzwerte in einem Speicher der Regeleinheit gespeichert sind oder durch die Regeleinheit errechnet werden,
e) Ansteuern des Antriebs abhängig von einer in der Regeleinheit gespeicherten Schaltlogik.

Das erfindungsgemäße Verfahren verbessert den Betrieb eines Gespanns, bei welchem ein Zugfahrzeug und ein Anhänger vorgesehen sind, wobei am Anhänger ein Antrieb, insbesondere Zusatzantrieb, mit einem Rad verbunden ist. Dabei kann für den Betrieb dieses Gespanns die Sicherheit deutlich erhöht werden, da das Verfahren insbesondere dafür ausgelegt ist, vom Anwender bzw. Fahrer des Gespanns gegebene Anweisungen überlagern, welche die Sicherheit des Gespanns gefährden. So kann die Regeleinheit insbesondere bei zu hohen Fahrtgeschwindigkeiten oder bei zu hohen Einschlagwinkeln zwischen Zugfahrzeug und Anhänger verhindern, dass der Antrieb am Anhänger in Betrieb genommen wird. Gleichzeitig kann die Regeleinheit beispielsweise bei Traktionsverlust am Zugfahrzeug automatisch und selbsttätig den Antrieb am Anhänger in Betrieb nehmen und so ein erhöhtes Antriebsdrehmoment für das Gespann erzeugen.

Mit Vorteil empfängt die Regeleinheit ein Anwendersignal und verarbeitet dieses, wobei die Regeleinheit den Antrieb nur in Betrieb nimmt, wenn sowohl das Anwendersignal als auch die Schaltlogik ein Inbetriebnehmen des Antriebs erlauben. Mit anderen Worten wird somit nur für den Fall, dass zum einen der Anwender einen Zusatzantrieb durch den Antrieb am Anhänger fordert und zum anderen, wenn auch gleichzeitig die in der Regeleinheit vorgesehene Schaltlogik, welche die entsprechenden Sicherheitsparameter des Betriebs des Gespanns berücksichtigt, den zusätzlichen Antrieb des Gespanns durch einen Antrieb am Anhänger erlaubt, dieser Antrieb durch die Regeleinheit in Betrieb genommen. Die Schaltlogik stellt somit eine Sicherheitsinstanz beim Betrieb eines Antriebs, insbesondere eines Zusatzantriebs an einem Gespann aus Zugfahrzeug und Anhänger, dar.

Es versteht sich, dass die auf ein Verfahren zur Steuerung eines Antriebs bezogenen Merkmale des vorstehend beschriebenen Gespanns auch in dem erfindungsgemäßen Verfahren Anwendung finden können.

Weitere Vorteile und Merkmale der vorliegenden Erfindung ergeben sich aus der nachfolgenden Beschreibung mit Bezug auf die beigefügte Zeichnung.

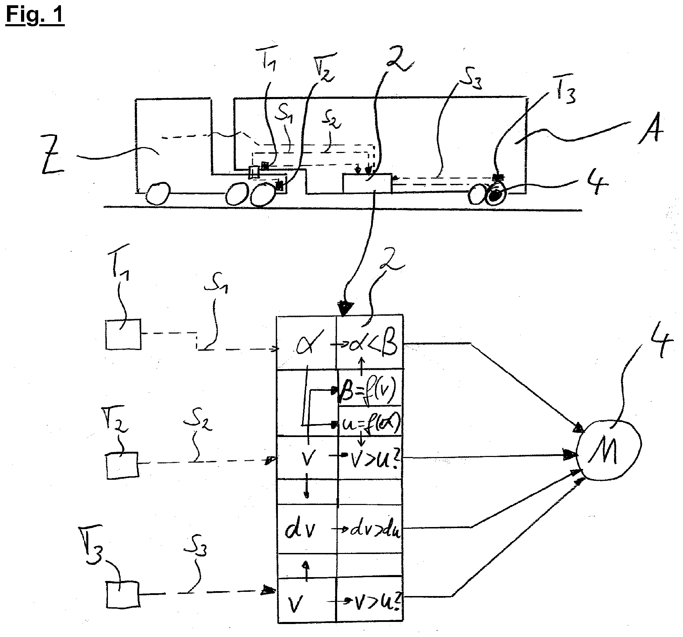

Dabei zeigt Fig. 1 eine schematische Ansicht eines Gespanns und ein vereinfachtes Blockschaltbild, aus welchem sowohl die einzelnen Komponenten eines Gespanns sowie auch eine Verfahrensweise zur Steuerung eines Antriebs an einem derartigen Gespann hervorgehen. Das Gespann ist erfindungsgemäß aus einem Zugfahrzeug Z und einem Anhänger A aufgebaut. Dabei ist die Regeleinheit 2 in dieser bevorzugten Ausführungsform vorzugsweise am Anhänger A angeordnet und festgelegt. Über verschiedene Signalleitungen ist die Regeleinheit 2 mit zumindest drei Sensoren T verbunden, welche jeweils Signale S an die Regeleinheit senden. Weiterhin ist die Regeleinheit über Signalleitungen mit einer Ventilanordnung verbunden und kann über entsprechende Steuersignale in der Ventilanordnung Ventile öffnen oder schließen und somit einen Betrieb des Antriebs 4 aufnehmen oder beenden. Ein erster Sensor T₁ ist dabei vorzugsweise im Bereich des Königszapfens und der Sattelkupplung des Gespanns angeordnet und misst den Winkel der Längsachsen des Zugfahrzeugs Z und des Anhängers A. Das von diesem ersten Sensor T₁ übermittelte erste Signal S₁ wird von der Regeleinheit empfangen und entsprechend ausgewertet, wobei die Regeleinheit 2 aus diesem ersten Signal S₁ einen Ist-Winkel α errechnet. Weiterhin ist vorzugsweise ein zweiter Sensor T₂ am Zugfahrzeug Z angeordnet, welcher die Drehgeschwindigkeit eines Rads, besonders bevorzugt eines angetriebenen Rads des Zugfahrzeugs Z, misst und ein entsprechendes zweites Signal S₂ an die Regeleinheit 2 übersendet. Alternativ oder zusätzlich zum zweiten Sensor T₂ ist ein dritter Sensor T₃ am Anhänger A vorgesehen, welcher analog zu dem zweiten Sensor T₂ die Drehgeschwindigkeit eines Rads am Anhänger A ermittelt. Der dritte Sensor T₃ sendet ein entsprechendes drittes Signal S₃ an die Regeleinheit 2. Aus dem zweiten Signal S₂ und/oder dem dritten Signal S₃ ermittelt die Regeleinheit eine Ist-Geschwindigkeit v. Der Ist-Winkel α wird dabei von der Regeleinheit 2 mit einem Grenzwinkel β verglichen. Die Ist-Geschwindigkeit v wird von der Regeleinheit 2 mit einer Grenzgeschwindigkeit u verglichen. Entsprechend des Ausgangs dieser Vergleiche sendet die Regeleinheit 2 ein entsprechendes Steuersignal an den Antrieb 4 bzw. indirekt an den Antrieb 4 über die Ansteuerung der Ventilanordnung. Sofern sowohl am Anhänger A als auch am Zugfahrzeug Z Drehgeschwindigkeiten der jeweils angetriebenen Räder ermittelt werden, kann die Regeleinheit 2 aus dem entsprechenden zweiten Signal S₂ und dem dritten Signal S₃ eine Geschwindigkeitsdifferenz dv ermitteln und diese mit einer Grenzdifferenz du vergleichen. Sofern am Zugfahrzeug Z eine größere Drehgeschwindigkeit des angetriebenen Rads vorliegt als am angetriebenen Rad des Anhängers A setzt die Regeleinheit 2 den Antrieb 4 automatisch in Betrieb. Auf diese Weise kann bei Traktionsverlust am Zugfahrzeug Z der Antrieb 4 ein zusätzliches Drehmoment zum Vortrieb des Gespanns bereitstellen und so das Vorankommen des Gespanns auch in schwerem Gelände erlauben.

### Bezugszeichen:

- 2: - Regeleinheit
- 4: - Antrieb
- α: - Ist-Winkel
- β: - Grenzwinkel
- A: - Anhänger
- dv: - Geschwindigkeitsdifferenz
- du: - Grenzdifferenz
- S: - Signal
- S_{1,2...}: - erstes, zweites, ... Signal
- T: - Sensor
- T_{1,2...}: - erster, zweiter, ... Sensor
- u: - Grenzgeschwindigkeit
- v: - Ist-Geschwindigkeit
- Z: - Zugfahrzeug

## Patentansprüche

1. Gespann, aufweisend ein Zugfahrzeug (Z) und einen Anhänger (A),
wobei der Anhänger (A) einen Antrieb (4) aufweist, welcher mit einem Rad des Anhängers (A) gekoppelt ist,
wobei eine Regeleinheit (2) vorgesehen und ausgelegt ist, ein Signal (S) eines Sensors (T) zu empfangen,
wobei die Regeleinheit (2) den Betrieb des Antriebes (4) abhängig von dem Signal (S) steuert,
**dadurch gekennzeichnet, dass** ein erster Sensor (T₁) die Winkelausrichtung zwischen dem Zugfahrzeug (Z) und dem Anhänger (A) erfasst und als erstes Signal (S₁) an die Regeleinheit (2) übermittelt,
wobei die Regeleinheit (2) aus dem ersten Signal (S₁) einen Ist-Winkel (α) bestimmt und diesen mit einem Grenzwinkel (β) vergleicht,
wobei die Regeleinheit (2) den Antrieb (4) nur in Betrieb nimmt, wenn der Ist-Winkel (α) kleiner als der Grenzwinkel (β) ist,
wobei der Grenzwinkel (β) zwischen 10° und 45° liegt.

2. Gespann nach Anspruch 1,
wobei der Ist-Winkel (α) die Winkelabweichung der Längsachsen des Zugfahrzeuges (Z) und des Anhängers (A) von 180° in der Horizontalen ist.

3. Gespann nach einem der Ansprüche 1 oder 2,
wobei der Grenzwinkel (β) zwischen 15° und 35° liegt.

4. Gespann nach einem der vorhergehenden Ansprüche,
wobei ein zweiter Sensor (T₂) die Drehgeschwindigkeit eines Rades des Zugfahrzeuges (Z) misst und als zweites Signal (S₂) an die Regeleinheit (2) übermittelt,
wobei die Regeleinheit (2) aus dem zweiten Signal (S₂) eine Ist-Geschwindigkeit (v) bestimmt und diese mit einer Grenzgeschwindigkeit (u) vergleicht,
wobei die Regeleinheit (2) den Antrieb (4) nur in Betrieb nimmt, wenn die Ist-Geschwindigkeit (v) kleiner als die Grenzgeschwindigkeit (u) ist.

5. Gespann nach einem der vorhergehenden Ansprüche,
wobei ein dritter Sensor (T₃) die Drehgeschwindigkeit des Rades des Anhängers (A), an welches der Antrieb (4) gekoppelt ist, misst und als drittes Signal (S₃) an die Regeleinheit (2) übermittelt,
wobei die Regeleinheit (2) aus dem dritten Signal (S₃) eine Ist-Geschwindigkeit (v) bestimmt und diese mit einer Grenzgeschwindigkeit (u) vergleicht,
wobei die Regeleinheit (2) den Antrieb (4) nur in Betrieb nimmt, wenn die Ist-Geschwindigkeit (v) kleiner als die Grenzgeschwindigkeit (u) ist.

6. Gespann nach Anspruch 4 oder 5,
wobei die Grenzgeschwindigkeit (u) zwischen 5 km/h und 40 km/h und vorzugsweise zwischen 8 km/h und 15 km/h liegt.

7. Gespann nach einem der Ansprüche 4 bis 6,
wobei die Regeleinheit (2) aus dem zweiten Signal (S₂) und dem dritten Signal (S₃) eine Geschwindigkeitsdifferenz (dv) zwischen dem Rad des Zugfahrzeuges (Z) und dem Rad des Anhängers (A) bestimmt und diese mit einer Grenzdifferenz (du) vergleicht,
wobei die Regeleinheit (2) den Antrieb (4) automatisch in Betrieb nimmt, wenn die Geschwindigkeitsdifferenz (dv) größer als die Grenzdifferenz (du) ist.

8. Gespann nach den Ansprüchen 1 und 4 oder den Ansprüchen 1 und 5, wobei die Regeleinheit (2) den Grenzwinkel (β) in Abhängigkeit von der Ist-Geschwindigkeit (v) bestimmt,
wobei der Grenzwinkel (β) mit steigender Ist-Geschwindigkeit (v) abnimmt.

9. Gespann nach einem der Ansprüche 4 bis 8,
wobei der zweite Sensor (T₂) und/oder der dritte Sensor (T₃) als induktiver Sensor ausgebildet ist.

10. Gespann nach einem der Ansprüche 4 bis 9,
wobei der zweite Sensor (T₂) und/oder der dritte Sensor (T₃) ein digitales Rechtecksignal erzeugt.

11. Gespann nach einem der Ansprüche 4 bis 10,
wobei der zweite Sensor (T₂) und/oder der dritte Sensor (T₃) bei Drehgeschwindigkeiten des Rades kleiner als 10 min⁻¹, vorzugsweise kleiner 1 min⁻¹ und besonders bevorzugt kleiner 0,5 min⁻¹ ein Signal (S₁, S₂) ausgibt, welches für die Regeleinheit (2) interpretierbar ist.

12. Gespann nach einem der vorhergehenden Ansprüche,
wobei am Anhänger (A) zwei Antriebe (4) vorgesehen und mit jeweils einem Rad des Anhängers (A) gekoppelt sind,
wobei die Regeleinheit (2) abhängig von den über Sensoren (T) übermittelte Signale (S) die Antriebe (4) gleich oder unterschiedlich ansteuert.

13. Verfahren zur Steuerung eines Antriebes (4),
wobei der Antrieb (4) an einem Anhänger (A) angeordnet und mit einem Rad des Anhängers (A) gekoppelt ist,
umfassend die Schritte:
a) Bereitstellen einer Regeleinheit (2) und eines Sensors (T),
wobei die Regeleinheit (2) mit dem Sensor (T) und dem Antrieb (4) über Signalleitungen und/oder mechanisch verbunden ist,
b) Messen eines Winkels zwischen einem Zugfahrzeug (Z) und dem Anhänger (A) und/oder einer Drehgeschwindigkeit eines Rades am Zugfahrzeug (Z) und/oder am Anhänger (A),
wobei zumindest ein erster Sensor (T₁) die Winkelausrichtung zwischen dem Zugfahrzeug (Z) und dem Anhänger (A) erfasst,
c) übermitteln des oder der gemessenen Wert(e) in Form eines Signals (S) an die Regeleinheit (2), zumindest des Signals (S₁) des ersten Sensors (T₁) an die Regeleinheit (2),
d) Bestimmen von Ist-Werten (α, v, dv) durch die Regeleinheit (2) und vergleichen der Ist-Werte (α, v, dv) mit Grenzwerten (β, u, du),
wobei die Grenzwerte (β, u, du) in einem Speicher der Regeleinheit (2) gespeichert sind oder durch die Regeleinheit (2) errechnet werden, wobei zumindest ein Ist-Wert (α, v, dv) ein Ist-Winkel (α) ist, welcher die Winkelabweichung der Längsachse des Zugfahrzeuges (Z) und des Anhängers (A) von 180° in der Horizontalen ist, und
wobei zumindest ein Grenzwert (β, u, du) ein Grenzwinkel (β) ist,
e) Ansteuern des Antriebs (4) abhängig von einer in der Regeleinheit (2) gespeicherten Schaltlogik,
wobei die Regeleinheit (2) den Antrieb nur in Betrieb nimmt, wenn der Ist-Winkel (α) klein als der Grenzwinkel (β) ist.

14. Verfahren nach Anspruch 13,
wobei die Regeleinheit (2) ein Anwendersignal empfängt und verarbeitet, wobei die Regeleinheit (2) den Antrieb (2) nur in Betrieb nimmt, wenn sowohl das Anwendersignal als auch die Schaltlogik ein Inbetriebnehmen des Antriebes (4) erlauben.

## Claims

1. A vehicle combination having a towing vehicle (Z) and a trailer (A),
wherein the trailer (A) has a drive (4) which is coupled to a wheel of the trailer (A),
wherein a control unit (2) is provided and is designed to receive a signal (S) of a sensor (T),
wherein the control unit (2) controls the operation of the drive (4) as a function of the signal (S)
**characterized in that**
a first sensor (T₁) senses the angular orientation between the towing vehicle (Z) and the trailer (A) and transmits it as a first signal (S₁) to the control unit (2),
wherein the control unit (2) determines an actual angle (α) from the first signal (S₁), and compares said actual angle (α) with a limiting angle (β),
wherein the control unit (2) activates the drive (4) only if the actual angle (α) is smaller than the limiting angle (β),
wherein the limiting angle (β) is between 10° and 45°.

2. The vehicle combination as claimed in claim 1,
wherein the actual angle (α) is the angular deviation of the longitudinal axes of the towing vehicle (Z) and of the trailer (A) from 180° in the horizontal.

3. The vehicle combination as claimed in one of claims 1 or 2,
wherein the limiting angle (β) is between 15° and 35°.

4. The vehicle combination as claimed in one of the preceding claims, wherein a second sensor (T₂) measures the rotational speed of a wheel of the towing vehicle (Z) and transmits it as a second signal (S₂) to the control unit (2),
wherein the control unit (2) determines an actual speed (v) from the second signal (S₂) and compares said actual speed (v) with a limiting speed (u),
wherein the control unit (2) activates the drive (4) only if the actual speed (v) is lower than the limiting speed (u).

5. The vehicle combination as claimed in one of the preceding claims, wherein a third sensor (T₃) measures the rotational speed of that wheel of the trailer (A) to which the drive (4) is coupled and transmits it as a third signal (S₃) to the control unit (2),
wherein the control unit (2) determines an actual speed (v) from the third signal (S₃) and compares said actual speed (v) with a limiting speed (u),
wherein the control unit (2) activates the drive (4) only if the actual speed (v) is lower than the limiting speed (u).

6. The vehicle combination as claimed in claim 4 or 5,
wherein the limiting speed (u) is between 5 km/h and 40 km/h and preferably between 8 km/h and 15 km/h.

7. The vehicle combination as claimed in one of claims 4 to 6,
wherein the control unit (2) determines a speed difference (dv) between the wheel of the towing vehicle (Z) and the wheel of the trailer (A) from the second signal (S₂) and the third signal (S₃), and compares said speed difference (dv) with a limiting difference (du), wherein the control unit (2) automatically activates the drive (4) if the speed difference (dv) is greater than the limiting difference (du).

8. The vehicle combination as claimed in claims 1 and 4 or claims 1 and 5, wherein the control unit (2) determines the limiting angle (β) as a function of the actual speed (v),
wherein the limiting angle (β) decreases as the actual speed (v) increases.

9. The vehicle combination as claimed in one of claims 4 to 8,
wherein the second sensor (T₂) and/or the third sensor (T₃) are/is embodied as an inductive sensor.

10. The vehicle combination as claimed in one of claims 4 to 9,
wherein the second sensor (T₂) and/or the third sensor (T₃) generates a digital square-wave signal.

11. The vehicle combination as claimed in one of claims 4 to 10,
wherein at rotational speeds of the wheel which are lower than 10 min⁻¹, preferably lower than 1 min⁻¹ and particularly preferably lower than 0.5 min⁻¹, the second sensor (T₂) and/or the third sensor (T₃) output(s) a signal (S₁, S₂) which can be interpreted by the control unit (2).

12. The vehicle combination as claimed in one of the preceding claims, wherein two drives (4) are provided on the trailer (A) and are respectively coupled to a wheel of the trailer (A),
wherein the control unit (2) actuates the drives (4) equally or differently as a function of the signals (S) which are transmitted via sensors (T).

13. A method for controlling a drive (4),
wherein the drive (4) is arranged on a trailer (A) and is coupled to a wheel of the trailer (A),
comprising the steps:
a) making available a control unit (2) and a sensor (T),
wherein the control unit (2) is connected to the sensor (T) and the drive (4) via signal lines and/or mechanically,
b) measuring an angle between a towing vehicle (Z) and the trailer (A) and/or a rotational speed of a wheel on the towing vehicle (Z) and/or on the trailer (A),
wherein at least a first sensor (T₁) detects the angular orientation direction between the towing vehicle (Z) and the trailer (A)
c) transmitting the measured value or values in the form of a signal (S) to the control unit (2), at least the signal (S₁) of the first sensor (T₁) to the control unit (2),
d) determining actual values (α, v, dv) by means of the control unit (2) and comparing the actual values (α, v, dv) with limiting values (β, u, du),
wherein the limiting values (β, u, du) are stored in a memory of the control unit (2) or are calculated by the control unit (2),
where at least one actual value (α, v, dv) is an actual angle (α) which is the angular deviation of the longitudinal axis of the towing vehicle (Z) and the trailer (A) of 180° in the horizontal plane, and where at least one limit value (β, u, du) is a limit angle (β)
e) actuating the drive (4) as a function of a switching logic which is stored in the control unit (2)
wherein the control unit (2) only starts the drive when the actual-angle (α) is smaller than the limit angle (β).

14. The method as claimed in claim 13,
wherein the control unit (2) receives and processes a user signal, wherein the control unit (2) activates the drive (2) only if both the user signal and the switching logic permit activation of the drive (4).

## Revendications

1. Attelage routier, comprenant un véhicule tracteur (Z) et une remorque (A), dans lequel la remorque (A) comprend un entraînement (4) qui est couplé à une roue de la remorque (A),
dans lequel il est prévu une unité de régulation (2) qui est conçue pour recevoir un signal (S) d'un capteur (T),
dans lequel l'unité de régulation (2) commande le fonctionnement de l'entraînement (4) en fonction du signal (S),
**caractérisé en ce qu'**un premier capteur (T) détecte l'orientation angulaire entre le véhicule tracteur (Z) et la remorque (A) et la transmet comme premier signal (S1) à l'unité de régulation (2),
l'unité de régulation (2) détermine à partir du premier signal (S1) un angle réel (α) et compare celui-ci à un angle limite (β),
l'unité de régulation (2) ne met en service l'entraînement (4) que lorsque l'angle réel (α) est inférieur à l'angle limite (β),
et l'angle limite (β) est compris entre 10° et 45°.

2. Attelage routier selon la revendication 1,
dans lequel l'angle réel (α) est l'écart angulaire des axes longitudinaux du véhicule tracteur (Z) et de la remorque (A) par rapport à 180° à l'horizontale.

3. Attelage routier selon l'une des revendications 1 ou 2,
dans lequel l'angle limite (β) est compris entre 15° et 35°.

4. Attelage routier selon l'une des revendications précédentes,
dans lequel un second capteur (T2) mesure la vitesse de rotation d'une roue du véhicule tracteur (Z) et la transmet comme second signal (S2) à l'unité de régulation (2),
dans lequel l'unité de régulation (2) détermine à partir du second signal (S2) une vitesse réelle (v) et compare celle-ci à une vitesse limite (u),
dans lequel l'unité de régulation (2) ne met en service l'entraînement (4) que lorsque la vitesse réelle (v) est inférieure à la vitesse limite (u).

5. Attelage routier selon l'une des revendications précédentes,
dans lequel un troisième capteur (T3) mesure la vitesse de rotation de la roue de la remorque (A) à laquelle l'entraînement (4) est couplé, et la transmet comme troisième signal (S3) à l'unité de régulation (2),
dans lequel l'unité de régulation (2) détermine à partir du troisième signal (S3) une vitesse réelle (v) et compare celle-ci à une vitesse limite (u),
dans lequel l'unité de régulation (2) ne met en service l'entraînement (4) que lorsque la vitesse réelle (v) est inférieure à la vitesse limite (u).

6. Attelage routier selon la revendication 4 ou 5,
dans lequel la vitesse limite (u) est située entre 5 km/h et 40 km/h, et de préférence entre 8 km/h et 15 km/h.

7. Attelage routier selon l'une des revendications 4 à 6,
dans lequel l'unité de régulation (2) détermine à partir du second signal (S2) et du troisième signal (S3) une différence de vitesse (dv) entre la roue du véhicule tracteur (Z) et la roue de la remorque (A) et compare celle-ci à une différence limite (du),
dans lequel l'unité de régulation (2) met l'entraînement (4) automatiquement en service quand la différence de vitesse (dv) est supérieure à la différence limite (du).

8. Attelage routier selon les revendications 1 et 4 ou des revendications 1 et 5,
dans lequel l'unité de régulation (2) détermine l'angle limite (β) en fonction de la vitesse réelle (v),
dans lequel l'angle limite (β) diminue lorsque la vitesse réelle (v) augmente.

9. Attelage routier selon l'une des revendications 4 à 8,
dans lequel le second capteur (T2) et/ou le troisième capteur (T3) est réalisé sous forme de capteur inductif.

10. Attelage routier selon l'une des revendications 4 à 9,
dans lequel le second capteur (T2) et/ou le troisième capteur (T3) engendre un signal rectangulaire numérique.

11. Attelage routier selon l'une des revendications 4 à 10,
dans lequel le second capteur (T2) et/ou le troisième capteur (T3), pour des vitesses de rotation de la roue inférieures à 10 min⁻¹, de préférence inférieures à 1 min⁻¹, et de façon particulièrement préférée inférieures à 0,5 min⁻¹, délivre un signal (S1, S2) qui est susceptible d'être interprété pour l'unité de régulation (2).

12. Attelage routier selon l'une des revendications précédentes,
dans lequel deux entraînements (4) sont prévus sur la remorque et sont couplés chacun à une roue de la remorque (A),
dans lequel l'unité de régulation (2) pilote les entraînements (4) soit de manière égale soit de manière différente en fonction des signaux (S) transmis via des capteurs (T).

13. Procédé pour la commande d'un entraînement (4), dans lequel l'entraînement (4) est agencé sur une remorque (A) et est couplé à une roue de la remorque (A),
comprenant les étapes consistant à :
a) fournir l'unité de régulation (2) et un capteur (T),
ladite unité de régulation (2) étant reliée au capteur (T) et à l'entraînement (4) via des lignes de signalisation et/ou par voie mécanique,
b) mesurer un angle entre un véhicule tracteur (Z) et la remorque (A) et/ou une vitesse de rotation d'une roue sur le véhicule tracteur (Z) et/ou sur la remorque (A),
c) transmettre la ou les valeurs mesurées sous la forme d'un signal (S) à l'unité de régulation (2), au moins le signal (S1) du premier capteur (T1) à l'unité de régulation (2),
d) déterminer des valeurs réelles (α, v, dv) au moyen de l'unité de régulation (2) et comparer les valeurs réelles (α, v, dv) à des valeurs limite (β, u, du), lesdites valeurs réelles (β, u, du) étant mémorisées dans une mémoire de l'unité de régulation (2) ou étant calculées par l'unité de régulation (2),
au moins une valeur réelle (α, v, dv) étant un angle réel (α), qui est l'écart angulaire des axes longitudinaux du véhicule tracteur (Z) et de la remorque (A) par rapport à 180° à l'horizontale, et
au moins une valeur limite (β, u, du) étant un angle limite (β),
e) piloter l'entraînement (4) en fonction d'une logique de commutation mémorisée dans l'unité de régulation (2),
l'unité de régulation (2) ne mettant l'entraînement en service que lorsque l'angle réel (α) est inférieur à l'angle limite (β).

14. Procédé selon la revendication 13,
dans lequel l'unité de régulation (2) reçoit et traite un signal provenant d'un utilisateur,
l'unité de régulation (2) ne mettant en service l'entraînement (2) que lorsque tant le signal provenant d'un utilisateur que la logique de commutation permettent une mise en service de l'entraînement (4).
